# EUROPEAN PATENT SPECIFICATION

(11) **EP 0 488 368 B1**
(45) Date of publication and mention of the grant of the patent: **05.02.1997**
(21) Application number: 91120511.0
(22) Date of filing: 29.11.1991
(51) Int. Cl.: B29C 41/46, B29C 41/28, B29C 35/06, B29C 35/10

(54) **Film casting method**
Verfahren zum Giessen von Folien
Procédé de moulage d'un film par coulage

(30) Priority: 30.11.1990 JP 330771/90
(43) Date of publication of application: 03.06.1992
(73) Proprietor: FUJI PHOTO FILM CO., LTD., Kanagawa (JP)
(72) Inventor: Yoshida, Toru, c/o FUJI PHOTO FILM CO., LTD., Minami-Ashigara-shi, Kanagawa (JP); Hayashi, Koichi, c/o FUJI PHOTO FILM CO., LTD., Minami-Ashigara-shi, Kanagawa (JP)
(74) Representative: Grünecker, Kinkeldey, Stockmair & Schwanhäusser Anwaltssozietät

(56) References cited:
- EP-A- 0 133 112
- EP-A- 0 353 993
- GB-A- 2 013 559
- US-A- 2 852 811
- US-A- 3 127 456
- PATENT ABSTRACTS OF JAPAN vol. 10, no. 349 (M-538)(2405) 26 November 1986 & JP-A- 61 148 013 ( FUJI PHOTO FILM CO. )
- PATENT ABSTRACTS OF JAPAN vol. 10, no. 295 (M-523)(2351) 7 October 1986 & JP-A- 61 110 520 ( FUJI PHOTO FILM CO. )

## Description

### Field of the Invention

The present invention relates to a film casting method of producing a plastic film, and specifically relates to a film casting method in which any wind-cased irregularity or any defect is not generated on the surface of a film on a support to thereby form a film excellent in flatness.

### Background of the Invention

Conventionally, in a method of producing a film from a macromolecular solution, for example, producing a cellulose triacetate film, in which the macromolecular solution is made to spread onto a running endless support of a metal plate and dried, an effort has been made such that, in a method to improve the product quality and to increase the casting speed, a poor solvent is added to a solvent of the macromolecular solution or the temperature of a dope casting layer after casting is kept within a certain temperature range for a certain period of time (for example, JP-B-61-39890, JP-A-61-148013).

As a drying means, the above JP-B-61-39890 teaches a method that hot water is made to flow onto the rear surface of a support (band). This method is however not preferable because it is complicated in the equipment. Further, the Publication discloses a method that heating wind is blown from the rear surface of a support so as to heat the support. In this case, however, the flow of wind is generated in the apparatus.

Moreover the above JP-A-61-148013 illustrates a drawing in which a heater is provided as means for heating a support (band) immediately after the casting. This means is however a combination of a heater and drying wind, and it produces a flow of drying wind similarly to the above description.

EP-A-0133112 discloses a film casting method of forming a plastic film wherein a macromolecular solution containing macromoleculars dissolved in organic solvent are spread onto a running endless support. In said method the formed film is dried by uniformly heating the rear surface of the support by using only a radiation heat source from the rear surface side of the support. In said method the film is dried in the same manner until complete dryness of the film.

In the method in which a macromolecular solution is made to spread onto a running support so that a plastic film is produced, however, specifically when a large quantity of solvent having a low boiling point is contained in an organic solvent to be used, the solvent sometimes begins to evaporate soon at the front end of a die when a macromolecular solution is extruded from the die, so that the macromolecular solution is solidified and stuck onto the front end of the die to thereby cause a defect on the film. Further, even when a small quantity of drying wind is blown onto a film, irregularity in drying is caused on the surface of the film by the drying wind because evaporation of the solvent is influenced by the blowing of the drying wind in the case where the flow of the drying wind is not uniform, and the irregularity in drying may remain in the inside of the film as optical irregularity. The irregularity in the flatness of the film is no problem when it is used only as a support for a photosensitive material. The film however has a problem in quality when it is optically utilized, for example, when the birefringence is utilized, for example, as a retardation compensating film for a liquid crystal display (LCD).

### Disclosure of the Invention

An object of the present invention is to solve the foregoing problems and to provide a film casting method of producing a plastic film in which any defect due to sticking of a macromolecular solution onto a die front end is not generated and in which no problems are caused in the case where the optical birefringence of the film is utilized.

The foregoing object of the present invention is accomplished by a film casting method of forming a plastic film wherein a macromolecular solution containing macromolecules dissolved in an organic solvent are spread onto a running endless support of a metal plate so as to be formed into a film, and the formed film is dried by uniformly heating the rear surface of the support by using only a radiation heat source from the rear surface side of the support **characterized in that** the rear surface side of the support is heated in a period before the content of said solvent in the film is decreased to be not more than 35% by weight and wherein after the content of said solvent in the film is decreased to be not more than 35 weight percent, the support is heated by drying wind.

According to the present invention, heating the rear surface of the support by using a radiation heat source means in other words, that the whole rear surface of the support is subject to infrared heating, high-frequency heating or the like. Specifically a steam heater, a dielectric heater, or the like, is used for this purpose. In comparison with the conventional method in which the rear surface of a film is kept cold because of evaporation of a solvent in the case wherein drying uses only heating wind on the front surface side, the method according to the present invention is remarkably different in that the heat for the evaporation of the solvent from the film front surface is supplied from the rear surface and the temperature of the rear surface of the film becomes higher than that of the front surface of the same. Consequently, the present invention is advantageous in movement of the solvent to the front surface side for the evaporation as a whole.

According to the present invention, a film on the front surface of the support is heated so as to be dried by only the radiation heat source without using any drying wind similarly to the foregoing case within a period before the solvent content in the film has decreased to be not more than 35 weight percent. This is because in the period where the solvent content is more than 35 weight percent, a film surface irregularity is caused by a partial difference in the convection current of the drying wind on the film surface which is the conventional cause of wind-caused irregularity. That is, the convection current drying by using heating wind causes a local irregularity on the film front surface because of variations in the local drying speed in the boundary film due to a flow of the drying wind. On the contrary, according to the present invention, drying can be progressively and uniformly performed on the whole film because it is performed by evaporation only due to the temperature rising of the film itself. Accordingly, the drying according to the present invention is remarkably different from the conventional method. The method according to the present invention has a feature in that only natural evaporation is generated on the whole surface by the heating of the film only by radiation heat.

It is therefore important that the radiation heat source is provided so that the surface of the film is irradiated uniformly and it is necessary that the maximum temperature is selected so as not to foam the film.

According to the present invention, after the residual solvent in the film has decreased to 35 weight percent, the film may be forcedly dried by using heating wind in the same manner as in the conventional method because there is no possibility of occurrence of irregularity in drying. Before the solvent content has decreased to the 35 weight percent, however, the film at the front surface side is not dried by using heating wind but radiation-heated from both the front and rear surfaces in an atmosphere in which the concentration of the solvent is high (because no drying air is used). Therefore, in such a method the whole film surface is gradually dried on a band so as to make the solvent content decreasing to a value less than 35 weight percent and after the film has been stripped off from the band, the film can be dried completely by using an after-drying device. As a result, it can be expected to further increase the producing speed.

The present invention will be further described. As the macromolecular material according to the present invention, polystyrene, polymethyl methacrylate, polypropylene, polyvinyl chloride, styrene-acrylonitrile copolymer polyethylene, polyacrylate, polyether sulfone, polyphenylene oxide, diacetyl cellulose, triacetyl cellulose, or the like may be used in addition to polycarbonate.

As the organic solvent to be used according to the present invention, a solvent for use for the foregoing macromolecular material may be selected from a chlorinated hydrocarbon group such as methylene chloride, and the like, a ketone group such as acetone, methyl ethyl ketone, and the like, and an aromatic group such as toluene and the like.

Further, as the endless support of a metal plate according to the present invention, the support may be provided in the form of a band or a drum. It is rather effective to use a support in the form of a band which can prolong the path in the film casting apparatus according to the present invention.

### Brief Description of the Drawings

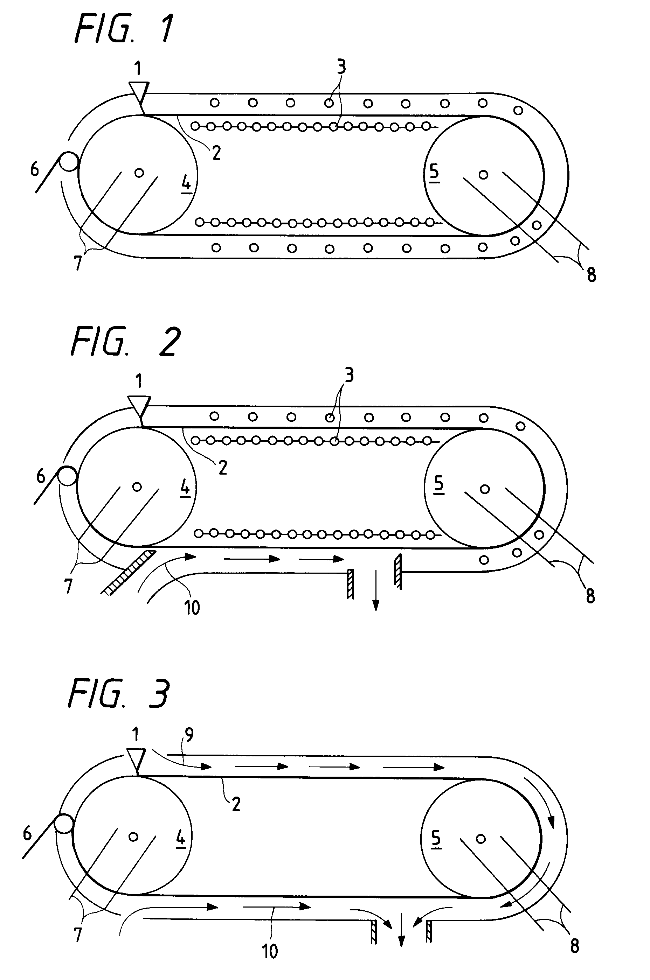

Fig. 1 is a side sectional view showing a band-type film casting apparatus as an embodiment of the film casting method according to the present invention; Fig. 2 is a side sectional view showing an apparatus as another embodiment; and Fig. 3 is a side sectional view for explaining an example of the conventional film casting method.

### Preferable Embodiment for practicing the Invention

In order to further clearly explain the invention, the present invention will be described with reference to the accompanying drawings. Fig. 1 is a side sectional view showing a film casting apparatus of the band-type as an embodiment of the film casting method according to the present invention. In Fig. 1, a macromolecular solution in which macromoleculars are dissolved in an organic solvent is supplied to a die 1 and made to flow from the die 1 onto an endless band-like support 2 of a metal plate so as to be formed into a film. Then, the film advances on an upper band portion of the casting apparatus as the support runs.

Generally, cold water 7 is passed through a front drum 4 existing just below the die 1 of the flowing portion so as to cool the surface of the front drum portion and to cool the endless band running on the front drum surface to thereby improve the gelation of the film of the macromolecular solution made to flow from the die 1.

The thus formed film receives radiation heat from steam heaters or dielectric heaters 3 from the band rear surface in the upper band portion of the film casting apparatus so that the temperature of the band is increased to thereby heat the film so as to raise the temperature thereof. Further, radiation heat from the steam heaters or dielectric heaters 3 is given to the film also from the band front surface in the upper band portion and uniform drying of the whole film surface is advanced by the radiation heat so that natural evaporation is generated because no drying wind exists. It is necessary to suitably exchange the atmosphere in the portion because the vapor pressure in the portion is increased because of evaporation of the solvent, and the exchange of the atmosphere must be performed so as not to give strong and local influence on the drying speed of the film.

Fig. 1 shows the state of the band-type film casting apparatus when gradual drying is advanced by radiation heating over all steps, a film is stripped off so as to be formed into a film 6 in the final stage of the film casting apparatus, and the film is sufficiently dried in an after drying device (not shown).

In the case of a film in which the flatness is strictly required, if a dead calm state is maintained for a while after casting as described above, the leveling effect is promoted so that the flatness can be improved.

When drying has advanced on the support so that the flow of the film perfectly stops, that is, when the solvent content has decreased to be not more than 35 weight percent, drying wind may be blown onto the film-like matter. In this case, however, it is necessary to make a measure so that the drying wind gives no influence onto a casting die port.

According to the present invention, it is possible to use such a method, as shown in Fig. 2, that drying is performed so that the residual solvent of the film decreases to be not more than 35 weight percent in a range from the flowing portion to an about 2/3 portion of the support, and drying is further performed in order to promote the drying by using heating wind as drying wind 10 in a lower band portion, as shown in Fig. 2, within the region after the above-mentioned 2/3 portion.

### (Examples)

The effects of the present invention will be described with reference to examples.

The present invention, however, is not limited only to those examples.

In the film casting method comprising the steps of making a methylene chloride solution of polycarbonate (18 weight percent, that is, 82 weight percent solvent) spread onto a support by using a die and drying the solution, the following examples were carried out.

### Comparison Example - 1

Wind was made to flow onto the support so as to dry the solution by using the conventional drying method as shown in Fig. 3. When a thus prepared sample was observed with a projector of a xenon lamp, it was found that a wavy irregularity, for example, due to blowing by drying wind was remarkably generated over the whole surface and the sample could not be used in view of its quality when the birefringence was utilized. Further, after extruding the solution for a while, a gelled matter of the solution began to be stuck onto the front end of the die and defects became conspicuous in the surface of a film. The film, however, was so transparent as to be able to be used as a quite superior film when it was not utilized for the optical use as described above.

### Example - 1

Fin-shaped indirect heaters each using steam were provided on both sides of the support as the radiation heat source as shown in Fig. 1, and the solution was made to spread in the condition that drying wind was stopped. Then, a film was stripped off and dried with an after-drying device. The thus formed product had no wind irregularity and defects, and the surface was extremely excellent in optical property. In this case, although the temperature at a band portion was set to be in a range of from 35 °C to the foaming temperature of the macromolecular solution, the actual temperature was in a range of from about 45 °C to 80 °C when the actual influence of evaporation latent heat onto the film surface temperature was taken into consideration.

The respective films obtained in the comparison example and the example-1 were drawn by using a drawing machine so as to have birefringence. In the film of the comparison example, irregularity in birefringence existed, and when the film was sandwiched between polarizers, irregularity in color existed over the whole surface. In the film of the example-1, to the contrary, no irregularity existed and the surface was flat even when the same treatment was effected on the film.

In the film casting method according to the present invention, generation of defects due to adhering of a gelled matter of a solution onto a die front end is prevented, products excellent in quality can be manufactured at a high speed even in the case of manufacturing a film where optical birefringence will be used.

## Claims

1. A film casting method of forming a plastic film (6), wherein a macromolecular solution containing macromolecules dissolved in an organic solvent are spread onto a running endless support (2) of a metal plate so as to be formed into a film, and the formed film is dried by uniformly heating the rear surface of the support by using only a radiation heat source from the rear surface side of the support **characterized in that** the rear surface side of the support is heated in a period before the content of said solvent in the film is decreased to be not more than 35% by weight and wherein after the content of said solvent in the film (6) is decreased to be not more than 35 weight percent, the support is heated by drying wind.

2. The method of claim 1, wherein the casting die port of said macromolecular solution onto the support is isolated from said drying wind.

3. The method of claim 1 or 2, wherein said heating by the drying wind is started at the time that the film is stripped off from the support.

4. The method of claim 1, wherein the support is also heated from the front surface side by using only said radiation heat source.

## Patentansprüche

1. Filmgießverfahren zum Bilden eines Kunststoffilms (6), worin eine markomolekulare Lösung enthaltend Makromoleküle, gelöst in einem organischen Lösungsmittel, auf einem laufenden Endlosträger (2) aus einer Metallplatte so ausgebreitet wird, daß sie zu einem Film geformt werden, und der geformte Film wird getrocknet durch gleichmäßiges Erwärmen der hinteren Oberfläche des Trägers unter Verwendung einer Strahlungswärmequelle von der hinteren Oberflächenseite des Trägers her, dadurch gekennzeichnet, daß die hintere Oberflächenseite des Trägers über eine Zeitspanne erwärmt wird, bevor sich der Gehalt an dem Lösungsmittel in dem Film auf nicht mehr als 35 Gew.-% verringert, und worin nach Absenken des Gehalts an diesem Lösungsmittel in dem Film (6) auf nicht mehr als 35 Gew.-% der Träger durch trocknende Luft erwärmt wird.

2. Verfahren nach Anspruch 1, worin die Gießdüsenöffnung für die makromolekulare Lösung auf dem Träger von der trocknenden Luft isoliert ist.

3. Verfahren nach Anspruch 1 oder 2, worin das Erwärmen durch die trocknende der Luft zu dem Zeitpunkt beginnt, an dem der Film von dem Träger abgezogen wird.

4. Verfahren nach Anspruch 1, worin der Träger auch von der vorderen Oberflächenseite nur unter Verwendung der Strahlungswärmequelle erwärmt wird.

## Revendications

1. Procédé de coulée de film pour former un film plastique (6) dans lequel une solution macromoléculaire contenant des macromolécules dissoutes dans un solvant organique est étalée sur un support sans fin (2) en mouvement constitué par une plaque métallique de manière à être mise sous forme d'un film, et le film formé est séché par chauffage uniforme de la surface arrière du support à l'aide seulement d'une source de chaleur par rayonnement depuis le côté de la surface arrière du support,
caractérisé en ce que le côté de la surface arrière du support est chauffé pendant une certaine durée avant que la teneur dudit solvant dans le film diminue de manière à ne pas être supérieure à 35% en masse et dans lequel, après que la teneur dudit solvant dans le film (6) ait diminué de manière à ne pas être supérieure à 35% en masse, le support est chauffé par un courant d'air de séchage.

2. Procédé selon la revendication 1, dans lequel l'orifice de la filière de coulée de ladite solution macromoléculaire sur le support est isolé dudit courant d'air de séchage.

3. Procédé selon la revendication 1 ou 2, dans lequel ledit chauffage par le courant d'air de séchage est commencé au moment où le film est séparé du support.

4. Procédé selon la revendication 1 dans lequel le support est chauffé aussi depuis le côté de la surface avant à l'aide seulement de ladite source de chaleur par rayonnement.
